# EUROPEAN PATENT SPECIFICATION

(11) **EP 4 223 424 B1**
(45) Date of publication and mention of the grant of the patent: **16.04.2025**
(21) Application number: 21926357.1
(22) Date of filing: 22.11.2021
(51) Int. Cl.: B65G 1/04, B65G 1/137, B07C 5/36

(54) **MULTI-CYCLE SHIPMENT SORTING SYSTEM AND CONTROL METHOD THEREFOR**
SORTIERSYSTEM FÜR MEHRZYKLUS-SENDUNGEN UND STEUERUNGSVERFAHREN DAFÜR
SYSTÈME DE TRI D'EXPÉDITION À PLUSIEURS CYCLES ET SON PROCÉDÉ DE COMMANDE

(30) Priority: 21.02.2021 CN 202110194578
(43) Date of publication of application: 09.08.2023
(73) Proprietor: Zhejiang Libiao Robots Co., Ltd., Zhejiang 310000 (CN)
(72) Inventor: ZHU, Jianqiang, Hangzhou, Zhejiang 310000 (CN)
(74) Representative: Ponti & Partners, S.L.P
(86) International application number: PCT/CN2021/131985
(87) International publication number: WO 2022/174643

(56) References cited:
- EP-A1- 1 894 637
- EP-A1- 3 728 079
- WO-A1-95/27673
- CA-A1- 3 098 974
- CN-A- 107 583 882
- CN-A- 108 499 886
- CN-A- 112 974 309
- CN-U- 202 700 831
- CN-U- 206 915 214
- DE-A1- 102014 111 385
- DE-A1- 102016 110 820
- FR-A1- 3 048 238
- US-A1- 2018 282 066
- US-A1- 2019 129 371
- US-A1- 2020 122 924

## Description

### CROSS-REFERENCE TO RELEVANT APPLICATIONS

The present disclosure claims the priority of the Chinese patent application filed with the China National Intellectual Property Administration on February 21st, 2021 with the application number of 202110194578.5, entitled of "MULTI-CYCLE SHIPMENT SORTING SYSTEM AND CONTROL METHOD THEREOF".

### TECHNICAL FIELD

The present disclosure relates to a shipment sorting system.

### BACKGROUND ART

Sorting shipments by self-navigation trolleys, i.e., robots, has been widely used in some situations.

For example, online retailers have a lot of commodities sold on the Internet, and in the process of online shopping, users will choose different commodities to place orders. When the retailers receive orders, they need to select these commodities from their warehouses one by one, package them uniformly, and deliver them to the users. If the distribution of shipments is completely manual, the cost will be increased significantly, and the selection of all-machine sorting or the combination of manual and machine can meet various requirements.

US2018/282066A1 discloses a system according to the preamble of claim 1.

### SUMMARY

The present disclosure provides a multi-cycle shipment sorting system according to claim 1 and a control method according to claim 11.

According to the invention, the multi-cycle shipment sorting system includes:
a delivery platform, wherein the delivery platform is provided with a delivery entrance, a delivery exit, and an unloading port;
a delivery device, wherein the delivery device are capable of delivering a plurality of shipment boxes sequentially from the delivery entrance to the unloading port, and after unloading, out putting the shipment boxes from the delivery outlet, wherein more than one piece of the same kind of shipment is contained in each of the shipment boxes, different shipment boxes are capable of containing the same or different shipments, and each of the shipment boxes is installed with an identification device;
a sorting platform, wherein the sorting platform is provided with a sorting entrance, a sorting outlet, and a cyclic section, wherein the cyclic section is provided with a loading port;
plural self-navigation trolleys, wherein the self-navigation trolleys, when enter from the sorting entrance and pass through the cyclic section, are ranked according to positions of the shipments delivered by the delivery device, and then run out of the sorting exit after being loaded at the loading port;
plural self-navigation trolleys, wherein the self-navigation trolleys enter from the sorting entrance, pass through the cyclic section, and run out of the sorting outlet after being loaded at the loading port;
a positioning device, wherein the positioning device is configured for performing positioning when the self-navigation trolleys are running;
a shipment-carrying device, wherein the shipment-carrying device is provided with an identifier that is capable of reading identification devices of the shipment boxes, the identifier is fixed close to the unloading port, and a man or a robot can take the shipments out of the shipment boxes and load them on the self-navigation trolleys located at the loading port; and
a server, wherein the server is connected to the self-navigation trolleys in a wireless manner, and is connected to the identifier, the delivery device, and the robot in a wired or wireless manner, respectively.

Optionally, the self-navigation trolleys are capable of running in multiple cycles on the cyclic section.

Optionally, the cycle can be a clockwise or counterclockwise single-direction cycle.

Optionally, the self-navigation trolleys are capable of passing through the loading port several times to be loaded.

Optionally, the identification device can be a bar code, a QR code, a graphic mark, a color mark, a size mark, or an RFID tag, and correspondingly, the identifier is a camera or an RFID card reader.

According to the invention, the shipment-carrying device further includes:
a displayer and/or a sound player, wherein the displayer and/or the sound player are electrically connected to the server, and the shipments are loaded manually according to prompts of the displayer and/or the sound player.

Optionally, the delivery device can be a drum conveyor, the shipment boxes are placed on the drum conveyor to be conveyed, and the drum conveyor is electrically connected to the server.

Optionally, the drum conveyor is U-shaped.

Optionally, the delivery device can be the self-navigation trolleys, the self-navigation trolleys are connected to the server in a wireless manner, and the positioning device for running of the self-navigation trolleys is installed on the delivery platform.

Optionally, the delivery entrance and the delivery outlet are connected to warehouse, and the delivery device is connected to the warehouse that delivers the shipments; the server can obtain information of the shipments through scanning QR codes of the shipments by a code scanner, and obtain information of the shipment boxes through the identification devices of the identifier; and
the sorting entrance and the sorting outlet can be connected to a packaging place.

Optionally, a plurality of bar codes, QR codes, graphic marks, color marks, size marks, or RIFD tags can be selected for the positioning device to be pasted on the platform, and cameras are installed on the self-navigation trolleys.

A control method according to the invention and as defined in claim 11 for a multi-cycle shipment sorting system, includes the following steps:
S1, unloading shipments by a plurality of shipment boxes when the shipments pass through an unloading port from a delivery entrance , wherein the shipment boxes are outputted via a delivery outlet;
S2, performing ranking, when a plurality of self-navigation trolleys enter from a sorting entrance and pass through a cyclic section, according to positions of shipments delivered by delivery device, wherein the self-navigation trolleys run out of a sorting outlet after loading the shipments at a loading port;
S3, carrying the shipments in the shipment boxes that pass through the unloading port manually or by a robot to the self-navigation trolleys that pass through the loading port;
S4, the self-navigation trolley running out of the sorting outlet and completing the sorting, without running in cycles again on the cyclic section, if the owner of the shipments on the same self-navigation trolley only owns those shipments; and
S5, the self-navigation trolley waiting to continue loading at the loading port, or, running to the cyclic section to wait to be loaded, if the owner of the shipments on the same self-navigation trolley owns other shipments, wherein when said other shipments are conveyed to the unloading port, the self-navigation trolley runs to the loading port to be loaded again, and so on; finally, the self-navigation trolley runs out of the sorting outlet and completes the sorting.

The present disclosure has at least the following advantages:
The delivery platform and the delivery device may adopt drum conveyor to convey the shipments. Compared with the self-navigation trolleys, the drum conveyor has low cost and large shipment load. Even if self-navigation trolleys are adopted, they may be arranged in a line, and although the cost is slightly higher, the shipment load is also very large.

The shipment-carrying device may be used by a human or robot. When the shipment-carrying device is used by a human, as the action thereof is a single repeated action that is not easy to make mistakes, the efficiency is very high, and the cost is relatively low. When carrying a plurality of shipments in the same shipment box, the efficiency is even significantly higher than a robot;
The self-navigation trolleys are very flexible in the running process. For the self-navigation trolleys that only carry only one shipment, they run out directly after passing through the cyclic section, thus making the road unblocked. For the self-navigation trolleys that need to carry a plurality of shipments, they enter the cyclic section to queue up and wait, and the waiting may be mobile; therefore, it is very flexible, and the waiting time for the self-navigation trolleys may be relatively short, resulting in a very high loading efficiency.

The present disclosure at least has the beneficial effects of a reasonable structure, a low cost, a small sorting site, a convenient distribution of shipments, and a high sorting efficiency.

### BRIEF DESCRIPTION OF DRAWINGS

FIG. 1 is a schematic diagram of the overall structure of the present disclosure;
FIG. 2 shows embodiment 1 of ranking of loading of the present disclosure; and
FIG. 3 shows embodiment 2 of ranking of loading of the present disclosure.

### DETAILED DESCRIPTION OF EMBODIMENTS

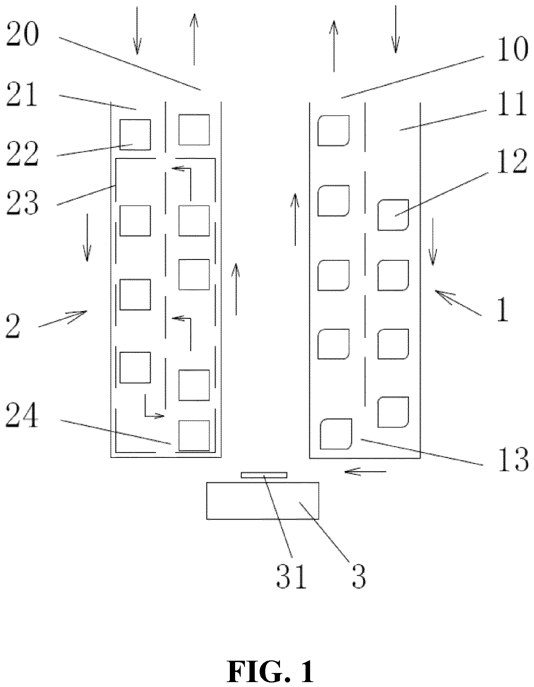

The present disclosure is further explained in conjunction with the accompanying drawings:
As shown in FIG. 1, a multi-cycle shipment sorting system includes:
a delivery platform 1, which is provided with a delivery 11, a delivery outlet 10, and an unloading port 13;
delivery device, which is capable of delivering a plurality of shipment boxes 12 in sequence from the delivery entrance 11 to the unloading port 13, and outputting, after unloading, the shipment boxes 12 from the delivery outlet 10, wherein more than one piece of the same kind of shipment is contained in each of the shipment boxes 12, different shipment boxes 12 are capable of containing same or different shipments, and each of the shipment boxes 12 is installed with an identification device;
a sorting platform 2, which is provided with a sorting entrance 21, a sorting outlet 20, and a cyclic section 23, wherein the cyclic section 23 is provided with a loading port 24;
plural self-navigation trolleys 22, wherein the self-navigation trolleys 22 enter from the sorting entrance 21, then are ranked, when passing through the cyclic section 23, according to the positions of shipments delivered by the delivery device, and run out of the sorting outlet 20 after loading at the loading port 24;
a positioning device, which is configured for performing positioning when the self-navigation trolleys 22 are running;
a shipmen-carrying device, which is provided with an identifier that is capable of reading the identification devices of the shipment boxes, wherein the identifier is fixed close to the unloading port 13, and the shipments in the shipment boxes 12 can be taken out and loaded on the self-navigation trolleys 22 located at the loading port 24 manually or by a robot 3; and
a server, which is connected to the self-navigation trolleys 22 in a wireless manner, and is connected to the identifier, the delivery device, and the robot in a wired or wireless manner, respectively.

The delivery platform 1 and the sorting platform 2 of the present disclosure may be arranged in parallel or at an angle, and they may also be arranged in a line. The installation is flexible, the site utilization rate is very high, and the carry may be performed manually or by the robot 3.

It should be noted that, loading of shipments into the shipment boxes 12 are completed before entering the delivery entrance 11. Generally, the information of shipments are obtained by the server through scanning QR codes of the shipments via a QR code scanner, and the information of the shipment boxes 12 are obtained through identifying the identification devices of the shipment boxes 12 via the identifier, so as to facilitate the server to arrange schedules in advance.

It should be also noted that, the delivery platform 1 and the delivery device mainly complete picking up and unloading shipments from a warehouse, while the ranking of shipment boxes 12 is basically fixed. The sorting platform 2 and the self-navigation trolleys 22 mainly complete sorting, loading, and unloading at terminals, the ranking of self-navigation trolleys 22 is set according to the positions of shipments. The two routes do not interfere with each other, so that the sorting effect may be significantly improved when the sorting site is small.

Optionally, for the self-navigation trolleys 22 which need to be loaded again, they are capable of running in multiple cycles on the cyclic section 23.

It should be noted that running in cycles may be running in cycles for a short path or a long path. Through calculation by software of the server, the arrangement is flexible, and even if the shipments are not loaded for the time being, in order to give ways to other self-navigation trolleys 22, they may also run for one more cycle, and the cycle is mainly in one direction such as clockwise or counterclockwise.

It should also be noted that, the sorting platform 2 of the present disclosure is only capable of accommodating two rows of the self-navigation trolleys 22 to run.

The sorting entrance 21 is located in one of the two rows, and the sorting outlet 20 is located in the other row, and at this time, the platform occupies the smallest land area and has the highest utilization rate.

When the same owner has a plurality of different shipments, the self-navigation trolleys 22 are capable of passing through the loading part 24 and loading for multiple times.

Optionally, the identification device of the shipment box is a bar code, a QR code, a graphic mark, a color mark, a size mark, or an RFID tag, and correspondingly, the identifier is a camera or an RFID card reader.

Optionally, the shipment-carrying device further includes:
a displayer 31 and/or a sound player, wherein the displayer 31 and/or the sound player are electrically connected to the server, and workers load the shipments manually according to the prompts of the displayer and/or the sound player. When a plurality of the same shipments are loaded on the same self-navigation trolley 22, the efficiency of manual labor is higher than the loading efficiency of the robot 3.

It should be noted that, it is possible that the shipments contained in a shipment box 12 belong to two owners, and at this time, it is prompted by the displayer 31 and/or the sound player that how many pieces are installed, and the remaining shipments will be loaded by the next self-navigation trolley 22.

Preferably, the delivery device is a drum conveyor, wherein the shipment boxes 12 are placed on the drum conveyor to be conveyed, and the drum conveyor is electrically connected to the server. The drum conveyor may adopt existing products, which have the characteristics of a relatively low cost and a large shipment load.

Preferably, the drum conveyor is U-shaped. The U-shaped refers to the route of conveying, and the U-shaped drum conveyor can save the site.

As another embodiment, the delivery device are the self-navigation trolleys, the self-navigation trolleys are connected to the server in a wireless manner, and a positioning device for running of the self-navigation trolleys 22 is installed on the delivery platform 1.

When the delivery device adopts the self-navigation trolleys, the self-navigation trolleys are relatively flexible during the loading of the shipments.

Optionally, the delivery entrance 11 and the delivery outlet 10 are connected to a warehouse, and the delivery device is connected to the warehouse that delivers the shipments; information of the shipments are obtained by the server through scanning OR codes of the shipments via the code scanner, and information of the shipment boxes 12 are obtained through identifying the identification devices of the shipment boxes 12 via the identifier; and
the sorting entrance 21 and the sorting outlet 20 are connected to a packaging place, and the self-navigation trolleys 22 may perform sorting in cycles.

The technical solution consists of a complete system from delivering, sorting to packaging.

The positioning device for the running of self-navigation trolleys 32 is relevant technology. The positioning device may adopt a plurality of bar codes, QR codes, graphic marks, size marks, or RFID tags to be pasted on the platform. Correspondingly, cameras are installed on the self-navigation trolleys 22.

A control method for a multi-cycle shipment sorting system includes the following steps:
S1, unloading shipments by a plurality of shipment boxes 12 when the shipments pass through an unloading port 13 from a delivery entrance 11, wherein the shipment boxes 12 are outputted via a delivery outlet 10;
S2, performing ranking, when a plurality of self-navigation trolleys enter from a sorting entrance and pass through a cyclic section, according to positions of shipments delivered by delivery device, wherein the self-navigation trolleys exit a sorting outlet after loading the shipments at a loading port;
S3, carrying the shipments in the shipment boxes 12 that pass through the unloading port 13 manually or by a robot 3 to the self-navigation trolleys 22 that pass through the loading port 24;
S4, the self-navigation trolley 22 running out of the sorting outlet 20 and completing the sorting, without running in cycles again on the cyclic section 23, if the owner of the shipments on the same self-navigation trolley 22 only owns those shipments,; and
S5, the self-navigation trolley 22 waiting to continue loading at the loading port 24, or, running to the cyclic section 23 to wait to be loaded, if the owner of the shipments on the same self-navigation trolley 22 owns other shipments, wherein when said other shipments are conveyed to the unloading port 13, the self-navigation trolley 22 runs to the loading port 24 to be loaded again, and so on; finally, the self-navigation trolley 22 runs out of the sorting outlet 20 and completes the sorting.

Steps S4 and S5 are several specific methods of ranking, and specific embodiments of ranking are introduced here:

When there is only one shipment in a shipment box, and its owner only has that shipment, any self-navigation trolley may be arranged, generally, a self-navigation trolley that stays at the loading port is arranged for loading.

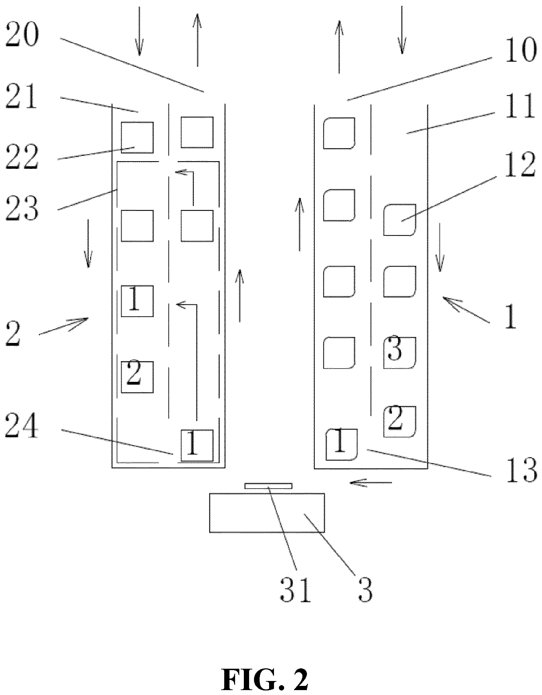

When the same owner needs two pieces of different shipments, as shown in FIG. 2, for example, the first shipment is in No. 1 shipment box and the second shipment is in No. 3 shipment box, at this time, the No. 1 self-navigation trolley immediately queued up, after completing loading of the shipment, behind the No.2 self-navigation trolley through the cyclic section. After the shipment in the No. 2 shipment box is loaded on the No. 2 self-navigation trolley, the shipment in the No. 3 shipment box is loaded on the No. 1 self-navigation trolley, and so on.

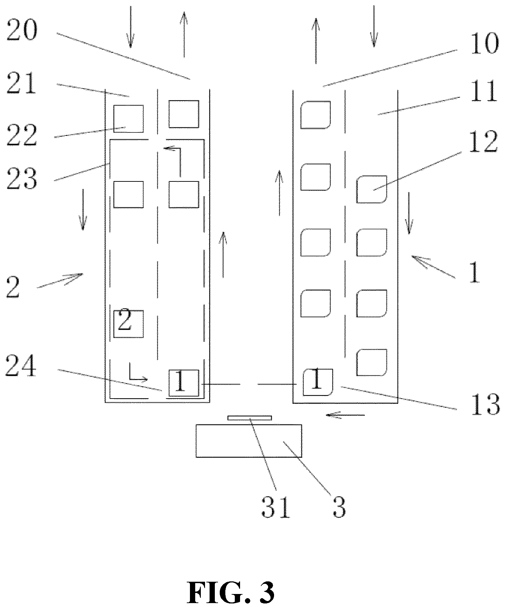

When two pieces of shipment from different owners are installed in the same shipment box, as shown in FIG. 3, for example, the No. 1 shipment box contains two pieces of the same shipment, at this time, after the first piece of shipment in the No.1 shipment box is loaded on the No. 1 self-navigation trolley, the No. 2 self-navigation trolley queued up in advance behind the No.1 self-navigation trolley, and then loads the second piece of the shipment on the No. 2 self-navigation trolley, and so on.

### Industrial applicability

The present disclosure has the beneficial effects of a small sorting site, convenient distribution of shipments, and a high sorting efficiency.

In addition, it should be understood that, the multi-cycle shipment sorting system and the control method thereof provided by the present disclosure are reproducible, and can be applied in a variety of industrial applications. For example, the multi-cycle shipment sorting system and the control method thereof provided by the present disclosure may be applied to the field of application where the shipments are sorted by robots.

## Claims

1. A multi-cycle shipment sorting system, comprising
a delivery platform (1), provided with a delivery entrance (11), a delivery outlet (10), and an unloading port (13);
a delivery device, capable of delivering a plurality of shipment boxes (12) in sequence from the delivery entrance (11) to the unloading port (13), and outputting, after unloading, a plurality of the shipment boxes (12) from the delivery outlet (10), wherein more than one piece of a same kind of shipment is contained in each of the shipment boxes (12), different shipment boxes (12) are capable of containing same or different shipments, and each of the shipment boxes (12) is installed with an identification device;
**characterized by** comprising:
a sorting platform (2), provided with a sorting entrance (21), a sorting outlet (20), and a cyclic section (23), wherein the cyclic section (23) is provided with a loading port (24);
plural self-navigation trolleys (22), wherein the self-navigation trolleys enter from the sorting entrance (21), and are ranked, when passing through the cyclic section (23), according to positions of shipments delivered by the delivery device, then run out of the sorting outlet (20) after loading at the loading port (24);
a positioning device, configured for performing positioning when the self-navigation trolleys (22) are running;
a shipment-carrying device, provided with an identifier that can read the identification devices of the shipment boxes (12), wherein the identifier is fixed close to the unloading port (13), and the shipments in the shipment boxes (12) can be taken out and loaded on the self-navigation trolleys (22) located at the loading port (24) manually or by a robot (3);
a server, wherein the server is connected to the self-navigation trolleys (22) in a wireless manner, and is connected to the identifier, the delivery device, and the robot in a wired or wireless manner, respectively; and
wherein the shipment-carrying device further comprises a displayer (31) and/or a sound player, wherein the displayer and/or the sound player is electrically connected to the server, and workers load the shipments manually according to prompts of the displayer and/or the sound player.

2. The multi-cycle shipment sorting system according to claim 1, wherein the self-navigation trolleys (22) are capable of running in multiple cycles on the cyclic section (23).

3. The multi-cycle shipment sorting system according to claim 2, wherein the cycles are clockwise or counterclockwise single-direction cycles.

4. The multi-cycle shipment sorting system according to claim 2 or 3, wherein the self-navigation trolleys (22) are capable of passing through the loading port (24) several times to be loaded.

5. The multi-cycle shipment sorting system according to any one of claims 1-4, wherein the identification device is a bar code, a QR code, a graphic mark, a color mark, a size mark, or an RFID tag, and correspondingly, the identifier is a camera or an RFID card reader.

6. The multi-cycle shipment sorting system according to any one of claims 1-5, wherein the delivery device is a drum conveyor, wherein the shipment boxes (12) are placed on the drum conveyor to be conveyed, and the drum conveyor is electrically connected to the server.

7. The multi-cycle shipment sorting system according to claim 6, wherein, the drum conveyor is U-shaped.

8. The multi-cycle shipment sorting system according to any one of claims 1-5, wherein the delivery device is the self-navigation trolleys, wherein the self-navigation trolleys are connected to the server in a wireless manner, and the positioning device for running of the self-navigation trolleys (22) is installed on the delivery platform (1).

9. The multi-cycle shipment sorting system according to any one of claims 1-8, wherein the delivery entrance (11) and the delivery outlet (10) are connected to a warehouse, and the delivery device is connected to a warehouse that delivers the shipments; information of the shipments is obtained by the server through scanning QR codes of the shipments via a code scanner, and information of the shipment boxes (12) is obtained by the identifier through identifying the identification devices of the shipment boxes (12); and
the sorting entrance (21) and the sorting outlet (20) are connected to a packaging place.

10. The multi-cycle shipment sorting system according to any one of claims 1-9, wherein a plurality of bar codes, QR codes, graphic marks, color marks, size marks, or RIFD tags are selected for the positioning device to be pasted on a platform, and cameras are installed on the self-navigation trolleys.

11. A control method for a multi-cycle shipment sorting system according to any of the previous claims, **characterized by** comprising steps of:
S1, unloading shipments by a plurality of shipment boxes (12) when the shipments pass through an unloading port (13) from a delivery entrance (11), and outputting the shipment boxes (12) via a delivery outlet (10);
S2, performing ranking, when a plurality of self-navigation trolleys (22) enter from a sorting entrance (21) and pass through a cyclic section (23), according to positions of shipments delivered by delivery device, wherein the self-navigation trolleys run out of a sorting outlet (20) after loading the shipments at a loading port (24);
S3, carrying the shipments in the shipment boxes (12) that pass through the unloading port (13) manually or by a robot (3) to the self-navigation trolleys (22) that pass through the loading port (24);
S4, the self-navigation trolley (22) running out of the sorting outlet (20) and completing the sorting, without running in cycles again on the cyclic section (23), if an owner of the shipments on the same self-navigation trolley (22) only owns those shipments; and
S5, the self-navigation trolley (22) waiting to continue loading at the loading port (24), or, running to the cyclic section (23) to wait to be loaded, if the owner of the shipments on the same self-navigation trolley (22) owns other shipments, wherein when other shipments are conveyed to the unloading port (13), the self-navigation trolley (22) runs to the loading port (24) to be loaded again, and so on; finally, the self-navigation trolley runs out of the sorting outlet (20) and completes the sorting.

## Patentansprüche

1. Mehrzyklenwarenlieferungs-Sortiersystem, das umfasst:
eine Förderplattform (1), die mit einem Fördereingang (11), einem Förderausgang (10) und einer Entladeöffnung (13) versehen ist;
eine Fördervorrichtung, die mehrere Warenlieferungskästen (12) der Reihe nach von dem Fördereingang (11) zu der Entladeöffnung (13) befördern und nach dem Entladen mehrere Warenlieferungskästen (12) aus dem Förderausgang (10) ausgeben kann, wobei in jedem der Warenlieferungskästen (12) mehr als ein Teil derselben Warenlieferungsart enthalten ist, verschiedene Warenlieferungskästen (12) gleiche oder verschiedene Warenlieferungen enthalten können und an jedem der Warenlieferungskästen (12) eine Identifizierungseinrichtung montiert ist;
gekennzeichnet, indem es umfasst:
eine Sortierplattform (2), die mit einem Sortiereingang (21), einem Sortierausgang (20) und einem zyklischen Abschnitt (23) versehen ist, wobei der zyklische Abschnitt (23) mit einer Ladeöffnung (24) versehen ist;
mehrere Selbstnavigationswagen (22), wobei die Selbstnavigationswagen von dem Sortiereingang (21) eintreten und dann, wenn der zyklische Abschnitt (23) durchlaufen wird, gemäß Positionen von Warenlieferungen, die durch die Fördervorrichtung befördert werden, eingestuft werden und dann nach Laden bei der Ladeöffnung (24) aus dem Sortierausgang (20) laufen;
eine Positionierungsvorrichtung, die konfiguriert ist zum Durchführen des Positionierens, wenn die Selbstnavigationswagen (22) laufen;
eine Warenlieferungen tragende Vorrichtung, die mit einem Identifizierer versehen ist, der die Identifizierungseinrichtungen der Warenlieferungskästen (12) lesen kann, wobei der Identifizierer in der Nähe der Entladeöffnung (13) befestigt ist und die Warenlieferungen in den Warenlieferungskästen (12) aus den Selbstnavigationswagen (22), die bei der Ladeöffnung (24) angeordnet sind, manuell oder durch einen Roboter (3) herausgenommen und in sie geladen werden können; und
einen Server, wobei der Server mit den Selbstnavigationswagen (22) drahtlos verbunden ist und mit dem Identifizierer, der Fördervorrichtung und dem Roboter jeweils drahtgebunden oder drahtlos verbunden ist;
wobei die Warenlieferungen tragende Vorrichtung ferner eine Anzeigevorrichtung (31) und/oder eine Schallwiedergabevorrichtung umfasst, wobei die Anzeigevorrichtung und/oder die Schallwiedergabevorrichtung mit dem Server elektrisch verbunden sind und Arbeiter die Warenlieferungen gemäß Eingabeaufforderungen der Anzeigevorrichtung und/oder der Schallwiedergabevorrichtung manuell laden.

2. Mehrzyklenwarenlieferungs-Sortiersystem nach Anspruch 1, wobei die Selbstnavigationswagen (22) in mehreren Zyklen im zyklischen Abschnitt (23) laufen können.

3. Mehrzyklenwarenlieferungs-Sortiersystem nach Anspruch 2, wobei die Zyklen unidirektionale Zyklen im Uhrzeigersinn oder gegen den Uhrzeigersinn sind.

4. Mehrzyklenwarenlieferungs-Sortiersystem nach Anspruch 2 oder 3, wobei die Selbstnavigationswagen (22) die Ladeöffnung (24) mehrmals durchlaufen können, um beladen zu werden.

5. Mehrzyklenwarenlieferungs-Sortiersystem nach einem der Ansprüche 1-4,
wobei die Identifizierungseinrichtung ein Strichcode, ein QR-Code, eine grafische Markierung, eine Farbmarkierung, eine Größenmarkierung oder ein RFID-Etikett ist und entsprechend der Identifizierer eine Kamera oder eine RFID-Kartenlesevorrichtung ist.

6. Mehrzyklenwarenlieferungs-Sortiersystem nach einem der Ansprüche 1-5, wobei die Fördervorrichtung eine Trommeltransportvorrichtung ist, wobei die Warenlieferungskästen (12) in der Trommeltransportvorrichtung angeordnet werden, um befördert zu werden, und die Trommeltransportvorrichtung mit dem Server elektrisch verbunden ist.

7. Mehrzyklenwarenlieferungs-Sortiersystem nach Anspruch 6, wobei die Trommeltransportvorrichtung U-förmig ist.

8. Mehrzyklenwarenlieferungs-Sortiersystem nach einem der Ansprüche 1-5, wobei die Fördervorrichtung die Selbstnavigationswagen sind, die Selbstnavigationswagen mit dem Server drahtlos verbunden sind und die Positionierungsvorrichtung für Laufen der Selbstnavigationswagen (22) an der Förderplattform (1) installiert ist.

9. Mehrzyklenwarenlieferungs-Sortiersystem nach einem der Ansprüche 1-8, wobei der Fördereingang (11) und der Förderausgang (10) mit einem Lager verbunden sind und die Fördervorrichtung mit einem Lager verbunden ist, das die Warenlieferungen liefert; Informationen der Warenlieferungen durch den Server durch Abtasten von QR-Codes der Warenlieferungen via eine Codeabtastvorrichtung erhalten werden und Informationen der Warenlieferungskästen (12) durch den Identifizierer durch Identifizieren der Identifizierungseinrichtungen der Warenlieferungskästen (12) erhalten werden; und
der Sortiereingang (21) und der Sortierausgang (20) mit einem Verpackungsort verbunden sind.

10. Mehrzyklenwarenlieferungs-Sortiersystem nach einem der Ansprüche 1-9, wobei mehrere Strichcodes, QR-Codes, grafische Markierungen, Farbmarkierungen, Größenmarkierungen oder RIFD-Etiketten für die Positionierungsvorrichtung, die an einer Plattform eingefügt werden soll, gewählt werden und Kameras an den Selbstnavigationswagen installiert sind.

11. Steuerverfahren für ein Mehrzyklenwarenlieferungs-Sortiersystem nach einem der vorhergehenden Ansprüche, gekennzeichnet, indem es Schritte umfasst:
S1, Entladen von Warenlieferungen durch mehrere Warenlieferungskästen (12), wenn die Warenlieferungen eine Entladeöffnung (13) von einem Fördereingang (11) durchlaufen, und Ausgeben der Warenlieferungskästen (12) mittels eines Förderausgangs (10);
S2, Durchführen von Einstufen, wenn mehrere Selbstnavigationswagen (22) von einem Sortiereingang (21) eintreten und einen zyklischen Abschnitt (23) durchlaufen, gemäß Positionen von Warenlieferungen, die durch die Fördervorrichtung befördert werden, wobei die Selbstnavigationswagen nach Laden der Warenlieferungen bei einer Ladeöffnung (24) aus einem Sortierausgang (20) laufen;
S3, Führen der Warenlieferungen in den Warenlieferungskästen (12), die die Entladeöffnung (13) durchlaufen, manuell oder durch einen Roboter (3) zu den Selbstnavigationswagen (22), die die Ladeöffnung (24) durchlaufen;
S4, Laufen des Selbstnavigationswagen (22) aus dem Sortierausgang (20) und Abschließen des Sortierens, ohne im zyklischen Abschnitt (23) erneut in Zyklen zu laufen, falls ein Besitzer der Warenlieferungen in demselben Selbstnavigationswagen (22) lediglich diese Warenlieferungen besitzt; und
S5, durch den Selbstnavigationswagen (22) Warten, Laden bei der Ladeöffnung (24) fortzusetzen, oder Laufen zu dem zyklischen Abschnitt (23), um zu warten, beladen zu werden, falls der Besitzer der Warenlieferungen in demselben Selbstnavigationswagen (22) weitere Warenlieferungen besitzt, wobei dann, wenn weitere Warenlieferungen zur Entladeöffnung (13) befördert werden, der Selbstnavigationswagen (22) zur Ladeöffnung (24) läuft, um wieder beladen zu werden, usw.; schließlich läuft der Selbstnavigationswagen aus dem Sortierausgang (20) und schließt das Sortieren ab.

## Revendications

1. Système de tri d'envois à cycles multiples comprenant
une plate-forme de livraison (1), dotée d'une entrée de livraison (11), d'une sortie de livraison (10) et d'un port de déchargement (13) ;
un dispositif de livraison, capable de livrer une pluralité de boîtes d'envoi (12) en séquence de l'entrée de livraison (11) au port de déchargement (13), et de sortir, après déchargement, une pluralité de boîtes d'envoi (12) de la sortie de livraison (10), dans lequel plus d'une pièce d'un même type d'envoi est contenue dans chacune des boîtes d'envoi (12), différentes boîtes d'envoi (12) sont capables de contenir des envois identiques ou différents, et chacune des boîtes d'envoi (12) est équipée d'un dispositif d'identification ;
**caractérisé en ce qu'**il comprend :
une plate-forme de tri (2), dotée d'une entrée de tri (21), d'une sortie de tri (20) et d'une section cyclique (23), dans lequel la section cyclique (23) est dotée d'un port de chargement (24) ;
plusieurs chariots d'auto-navigation (22), dans lequel les chariots d'auto-navigation entrent par l'entrée de tri (21) et sont classés, lors de leur passage dans la section cyclique (23), en fonction des positions des envois livrés par le dispositif de livraison, puis sortent par la sortie de tri (20) après avoir été chargés au niveau du port de chargement (24) ;
un dispositif de positionnement, configuré pour effectuer le positionnement lorsque les chariots d'auto-navigation (22) sont en marche ;
un dispositif de transport des envois, doté d'un identifiant capable de lire les dispositifs d'identification des boîtes d'envoi (12), dans lequel l'identifiant est fixé à proximité du port de déchargement (13), et les envois dans les boîtes d'envoi (12) peuvent être sortis et chargés sur les chariots d'auto-navigation (22) situés au niveau du port de chargement (24), manuellement ou par un robot (3) ;
un serveur, dans lequel le serveur est connecté aux chariots d'auto-navigation (22) sans fil, et est connecté à l'identifiant, au dispositif de livraison et au robot de manière filaire ou sans fil, respectivement ; et
dans lequel le dispositif de transport des envois comprend en outre un afficheur (31) et/ou un lecteur audio, l'afficheur et/ou le lecteur audio étant connectés électriquement au serveur, et les travailleurs chargent les envois manuellement en fonction des invites de l'afficheur et/ou du lecteur audio.

2. Système de tri d'envois à cycles multiples selon la revendication 1, dans lequel les chariots d'auto-navigation (22) sont capables de fonctionner en cycles multiples sur la section cyclique (23).

3. Système de tri d'envois à cycles multiples selon la revendication 2, dans lequel les cycles sont des cycles unidirectionnels dans le sens des aiguilles d'une montre ou dans le sens inverse des aiguilles d'une montre.

4. Système de tri d'envois à cycles multiples selon la revendication 2 ou 3, dans lequel les chariots d'auto-navigation (22) peuvent passer plusieurs fois par le port de chargement (24) pour être chargés.

5. Système de tri d'envois à cycles multiples selon l'une quelconque des revendications 1 à 4,
dans lequel le dispositif d'identification est un code-barres, un QR code, une marque graphique, une marque de couleur, une marque de taille ou une étiquette RFID, et de manière correspondante, l'identifiant est une caméra ou un lecteur de carte RFID.

6. Système de tri d'envois à cycles multiples selon l'une quelconque des revendications 1 à 5, dans lequel le dispositif de livraison est un convoyeur à tambour, dans lequel les boîtes d'envoi (12) sont placées sur le convoyeur à tambour pour être transportées, et dans lequel le convoyeur à tambour est connecté électriquement au serveur.

7. Système de tri d'envois à cycles multiples selon la revendication 6, dans lequel le convoyeur à tambour est en forme de U.

8. Système de tri d'envois à cycles multiples selon l'une quelconque des revendications 1 à 5, dans lequel le dispositif de livraison est constitué par les chariots d'auto-navigation, dans lequel les chariots d'auto-navigation sont connectés au serveur sans fil, et le dispositif de positionnement pour le fonctionnement des chariots d'auto-navigation (22) est installé sur la plate-forme de livraison (1).

9. Système de tri d'envois à cycles multiples selon l'une quelconque des revendications 1 à 8, dans lequel l'entrée de livraison (11) et la sortie de livraison (10) sont reliées à un entrepôt, et le dispositif de livraison est connecté à un entrepôt qui livre les envois ; les informations sur les envois sont obtenues par le serveur en scannant les QR codes des envois à l'aide d'un lecteur de codes, et les informations sur les boîtes d'envoi (12) sont obtenues par l'identifiant en identifiant les dispositifs d'identification des boîtes d'envoi (12) ; et
l'entrée de tri (21) et la sortie de tri (20) sont connectées à un lieu d'emballage.

10. Système de tri d'envois à cycles multiples selon l'une quelconque des revendications 1 à 9, dans lequel plusieurs codes à barres, QR codes, marques graphiques, marques de couleur, marques de taille ou étiquettes RIFD sont sélectionnés pour le dispositif de positionnement à coller sur une plate-forme, et des caméras sont installées sur les chariots d'auto-navigation.

11. Procédé de commande d'un système de tri d'envois à cycles multiples selon l'une quelconque des revendications précédentes, **caractérisé en ce qu'**il comprend les étapes suivantes :
S1, déchargement des envois par une pluralité de boîtes d'envoi (12) lorsque les envois passent par un port de déchargement (13) à partir d'une entrée de livraison (11), et sortie des boîtes d'envoi (12) par une sortie de livraison (10) ;
S2, réalisation d'un classement, lorsqu'une pluralité de chariots d'auto-navigation (22) entrent par une entrée de tri (21) et passent par une section cyclique (23), en fonction des positions des envois livrés par le dispositif de livraison, les chariots d'auto-navigation sortant d'une sortie de tri (20) après avoir chargé les envois au niveau d'un port de chargement (24) ;
S3, transport des envois dans les boîtes d'envoi (12) qui passent par le port de déchargement (13) manuellement ou par le biais d'un robot (3) vers les chariots d'auto-navigation (22) qui passent par le port de chargement (24) ;
S4, le chariot d'auto-navigation (22) sort de la sortie de tri (20) et termine le tri, sans repasser en cycle sur la section cyclique (23), si un propriétaire des envois sur le même chariot d'auto-navigation (22) n'est propriétaire que de ces envois ; et
S5, le chariot d'auto-navigation (22) attend de poursuivre le chargement au port de chargement (24), ou se dirige vers la section cyclique (23) en attente d'être chargé, si le propriétaire des envois sur le même chariot d'auto-navigation (22) possède d'autres envois, dans lequel lorsque d'autres envois sont acheminés vers le port de déchargement (13), le chariot d'auto-navigation (22) se dirige vers le port de chargement (24) pour être chargé à nouveau, et ainsi de suite ; enfin, le chariot d'auto-navigation sort de la sortie de tri (20) et achève le tri.
